Europäisches Patentamt

European Patent Office

Office européen des brevets

(19)

(11) **EP 1 014 070 A2**

(12) **EUROPEAN PATENT APPLICATION**

(43) Date of publication:
**28.06.2000 Bulletin 2000/26**

(51) Int Cl.$^7$: **G01M 11/00**, G02B 6/40

(21) Application number: **99850200.9**

(22) Date of filing: **17.12.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **18.12.1998 SE 9804445**<br><br>(71) Applicant: **TELEFONAKTIEBOLAGET L M ERICSSON (publ)**<br>**126 25 Stockholm (SE)** | (72) Inventors:<br>• **Wenxin, Zheng**<br>**170 72 Solna (SE)**<br>• **Hultén, Ola**<br>**161 71 Bromma (SE)**<br><br>(74) Representative: **Rosenquist, Per Olof**<br>**Bergenstrahle & Lindvall AB,**<br>**P.O. Box 17704**<br>**118 93 Stockholm (SE)** |

(54) **Splice loss estimation based on image processing**

(57)    Cold fiber pictures are taken of the end portions of two optical fibers before and after fusion splicing. From the outer contours of the fibers, i.e. of the their claddings, in the pictures a type of core deformation is determined. Based on the core deformation type, in the pictures a the magnitude of a corresponding typical deformation is determined, by only measuring the position of outer contours in relation to each other. The magnitude of the core deformation can then be determined and thus an approximative shape of the deformed cores. From this shape a splice loss estimation is calculated, which is suffficiently accurate for many spliced and thus only by evaluating the cladding deformation as seen in cold images.

# Fig. 5

| Deformation type | Cladding shape before splicing | Cladding shape after splicing | Measured core deformation | Reason |
|---|---|---|---|---|
| A: axis offset $\delta_A$<br>B: axis deform<br>$\delta_B = \delta_b - \delta_A$ | $\delta_b$ | $\delta_A$ | | Dirty V-groove or curled fiber |
| C: cleave angle offset $\delta_C$ | $\delta_c$ | | | Bad cleaver or fiber twisted before cleaving |
| D: axis angle offset $\delta_D$ | $\delta_D$ | | | A lip left on the end surface from bad cleaver |
| E: radius offset $\delta_E$ | | $\delta_E$ | | Too big gap between ends or too little overlap |
| F: overlap bending $\delta_F$ | $\delta_F$ | | | Too much overlap or too low overlap current |

**Description**

TECHNICAL FIELD

The present invention relates to a method and device for estimating losses in splices made between optical fibers, in particular in splices between optical fibers bonded to each other to form ribbon fibers.

BACKGROUND AND PRIOR ART

In the ever expanding telecommunication services such as Internet, Intranet, CATV, etc. there is a need for optical cables holding a high number of individual optical fibers. Although many of these high-fiber-count cables are still made of discrete or individual optical fibers, ribbon structured optical fibers, comprising from 2 to 24 individual fibers per ribbon, are used more and more in many countries. The improvement in design and production of such fiber ribbons combined with the increased efficiency of methods of simultaneously splicing all the individual fibers in a ribbon fiber to the individual fibers in another ribbon fiber, so called mass fusion splicing techniques, can greatly reduce the time and cost of the installation and restoration of optical cables. However, in all splices made between optical fibers a light wave propagating in the optical fibers through a splice experiences a loss of electromagnetic power, this loss being called the splice loss. The mean value of the splice losses of all individual fibers in a 12-fiber ribbon can attain as low a value as 0.02 - 0.04 dB for both matched cladding fibers and depressed cladding fibers, provided that the fibers used have a very good core to cladding concentricity, such as a mean eccentricity less than 0.2 $\mu$m.
The loss in fusioned spliced generally depends on the deformation of the fiber cores caused by the splicing operation, the shape and the degree of the deformation being dependent on the accuracy of the alignment of the fiber ends with each other as well as othe conditions in the fusion process. An automated single-fiber fusion splicer, equipped with a digital imaging system, can align the fiber ends in both transverse and longitude directions before splicing and control the fusion process during the splicing, see W. Zheng, "Real time control of arc fusion for optical fiber splicing", *IEEE J. of Lightwave Technology,* Vol. 11, No. 4, pp. 548 - 553, April 1993, and W. Zheng, O. Hultén and R. Rylander, "Erbium-doped fiber splicing and splice loss estimation," *IEEE J. of Lightwave Technology,* Vol. 12, No. 3, pp. 430 - 435, March, 1994. However, the alignment of individual fibers, especially alignment in the longitudinal direction for a mass fusion splicer requires a very complicated and accurate procedure and is rather time consuming, see Y. Kikuya, M. Hitohisa, K. Koyabu, and F. Ohira, "Alignment of optical axes by using electrostatic force", *Optics Letters,* Vol. 18, No. 11, pp. 864 - 866, June, 1993, and M. Kubota, K. Yoshida, M. Mikawa, and T. Morimitsu, "Fusion mass-splices for optical fibers using micro mass axis alignment device", *International Wire & Cable Symposium Proceedings,* pp. 214 - 220, Nov. 1996. Thus, in most mass fusion splicers the transverse alignment of the individual fibers is only passively accomplished by positioning the fibers in fixed V-grooves. Dirty V-grooves, remaining particles on the bare surface of stripped fibers, curled fibers, a high eccentricity of the core of a fiber in relation to the surrounding cladding thereof, imperfect cleaving angles, an inappropriate overlap distance, etc., will all result in large deformations of the cores when the surface tension of the molten glass of the fibers pulls the fibers into an alignment of their outer cylindrical surfaces during the fusioning process. Consequently, a determination of the quality of each individual splice in a fiber ribbon is important and indispensable.
There has for many years been a search for a suitable method for a determination of the individual splices in splices made between ribbon fibers, in order to replace the time-consuming and costly measurement from the remote, other ends of the optical fibers. Among those efforts, electronic imaging systems and digital image processing techniques have been widely used. For instance, a method using a one-directionally observed (one-view) image has been developed and implemented in a ribbon splicer, see M. Miyauchi, M. Tachikura, T. Katagiri, M. Sato, A. Ide, T. Haibara and M. Matsumoto, "Fully automatic and high-speed splicing machine for optical fiber ribbon", *The Transactions of the IEICE,* vol. E72, No. 9, pp. 970 - 978, Sept. 1989. The measurement accuracy of the fiber cladding offset is about 1.3 $\mu$m using this one-view method, see A. Ide and M. Tachikura, "Fiber misalignment measurement method using one- directionally observed image", *Electronics and Communications in Japan,* Part 2, Vol. 72, No. 3, pp. 81 - 90, 1989. To increase the accuracy, two-view observing systems using one CCD-camera were developed to evaluate images of ribbon fibers in two perpendicular views, see H. Watanabe, Y. Toimoto, and K. Oda, "Fiber fusion splicer for 12-fiber ribbon", *Proceedings of the SPIE,* Vol. 1817, Optical communications, pp. 23 - 29, 1992. The measurement resolution as to fiber cladding offset was reported to be 0.3 $\mu$m, see T. Onodera, H. Taya, T. Yamada, and M. Yoshinuma, "Development of single-mode four-fiber ribbon splicer with accurate splice loss estimation", *Optics Letters,* Vol. 15, No. 23, pp. 1406 - 1408, 1990, which is one order better than the one-view-observing method. In order to see the real core deformation, instead of only observing the cladding offset, dual optical magnification CCD imaging systems have been developped, see the above cited article for M. Kubota, K. Yoshida, M. Mikawa, and T. Morimitsu, "Fusion mass-splices for optical fibers using micro mass axis alignment device", *International Wire & Cable Symposium Proceedings,* pp. 214 - 220, Nov., 1996, and K. Yoshida, M. Kubota, and M. Mikawa, "Mass fusion splicer using micro alignment mechanism", *NTT Review*, vol. 9, no. 3, pp. 117 - 119, May, 1997. Using a high magnification, the cores in the splice region and thus their deformations are visible, and the splice loss can be computed according to the shape of the core deformation, see T. Sano, T. Watanabe, and K. Osaka, "Analysis of mass fusion splice loss", *International Wire & Wire Symposium Proceedings,* pp. 214 - 220, Nov., 1996. However, in this method only one fiber in one view can been seen at one time. For a 12-fiber ribbon, the optical system has to move and re-focus at least 24 times to finish the estimation of loss.

A simple method of evaluating fiber splices is the hot-fiber image processing technique which does not require any additional hardware more than that found in existing automatic fiber splicers but only modified image processing software. It has for several years been used for evaluating single-fiber splices. It is discussed in the cited articles for W. Zheng, W. Zheng et al. and also in W. Zheng, "Loss estimation for fusion splices of single-mode fibers.", *Proceedings of International SPIE'91 Conference,* in Boston, Vol. 1580, pp. 380 - 390, Sept. 1991.

SUMMARY OF THE INVENTION

It is an object of the invention to provide a method and device for estimating loss in splices made between optical fibers, in particular between optical fibers in ribbon fibers, using only images showing the outline of splices after the splicing operation.

It is another object of the invention to provide a method and device for estimating loss in splices made between optical fibers in ribbon fibers in which a movement of the optical system is not necessary for a loss estimation.

Thus an estimation is made by taking only "cold" pictures of the splice region directly before and directly after making the splice. In the cold pictures the fibers do not issue any light owing to heating and in these pictures basically only the outer sides of the optical fibers can be observed, in particular the outer sides of the fiber claddings. Thus particularly a picture is taken of a region of the optical fibers at the end surfaces of the fibers which are to be joined to each other, this picture being taken directly before splicing when the optical fibers are positioned at each other having their end surfaces in contact with each other. Then also a picture is taken after splicing. The two captured pictures are analyzed to determine a type of deformation of the fiber ends or of the cores of the fibers and to determine, as given by the outlines or contuors in the pictures, a characteristic offset associated with the type of deformation, which was first determined. The determined type of deformation and the determined characteristic offset are used in calculating an estimate of the optical loss in the splice.

BRIEF DESCRIPTION OF THE DRAWINGS

The invention will now be described by way of a non-limiting embodiment with reference to the accompanying drawings, in which

- Fig. 1 is a schematic view of an optical system according to prior art for simultaneously observing 12-fiber ribbon in two views , the system being capable of simultaneously focusing on all fibers,
- Figs. 2a - 2d are cold and hot-fiber images of a 12-fiber ribbon splice taken before the splicing operation, in the overlap step, in the very splicing step and after splicing process respectively, where Figs. 2b and 2c are taken when an electric arc is active and the hot image of Fig. 2c is taken without any background illumination,
- Fig. 3a is a hot-fiber image magnified from the 6th fiber in Fig. 2c, where the core deformation is clearly visible in the middle of the fiber,
- Fig. 3b is a light intensity profile measured at the dashed line in Fig. 3a,
- Figs. 4a is an analyzed cold image showing the computed cladding offset, the gap between end surfaces of opposite fibers and cleave angles of the left and right fibers in one view projection,
- Fig. 4b is an analyzed hot image showing in one view projection magnified regions at the splices, the shape of the deformed cores at the splices and the splice losses, the shapes of the core deformation being derived from the image of splices and the losses being calculated from the derived core shapes,
- Fig. 5 is on overview illustrating types A - F of core deformations related to the corresponding deformation of the cladding,
- Fig. 6a is a diagram illustrating typical shapes of exponential functions $f_e(z)$ simulating core deformations of types A and B as shown in Fig. 5,
- Fig. 6b is a diagram illustrating typical shapes of exponential functions $f_e(z)$ simulating core deformations of types C, D, and E as shown in Fig. 5,
- Fig.7a is a diagram illustrating typical shapes of superposed exponential functions $f_e(z)$ simulating the core deformations of type F as shown in Fig. 5,
- Fig. 7b is a diagram illustrating typical shapes of superposed exponential functions $f_e(z)$ simulating core deformations corresponding to combinations of types B and C as shown in Fig. 5,

- Fig. 8a is a diagram illustrating the loss coefficient as a function of core deformation curvature for core deformations of types A and B and of types C, D, and E as shown in Fig. 5, where the normalized frequency $V=n_1ka(2\Delta)^{\frac{1}{2}}$ is set to 2 and the refractive index of cladding is assumed to be 1.5 and the wavelength 1.3 $\mu$m,
- Fig. 8b is a diagram illustrating the loss coefficient as a function of mode field radius for core deformations of types A and B and of types C, D, and E as shown in Fig. 5, where the data of Fig. 8a are used,
- Fig. 9 is a diagram illustrating splice loss estimation for optical fibers of the OVD type, where the Bellcore requirement is met,
- Fig. 10 is a diagram illustrating splice loss estimation for optical fibers of the MCVD type, where the Bellcore requirement is met,
- Fig. 11 is a diagram illustrating splice loss estimation for optical fibers of the VAD type, where the Bellcore requirement is almost met,
- Fig. 12 is a diagram illustrating splice loss estimation for optical fibers of the True wave type, where the Bellcore requirement is not met, since the fiber has a thin core and the estimation parameters are not optimized for this specific fiber type, and
- Fig. 13 is a diagram illustrating splice loss estimation 8-fiber ribbons of the VAD type, where the Bellcore requirement is not 100% met, but very close.

DESCRIPTION OF PREFERRED EMBODIMENTS

Optical system

An optical system used for estimating the losses in a splice between fiber ribbons using the hot fiber image method must allow that the ribbon fibers are simultaneously observed in two substantially perpendicular directions. In such a direction all the individual fibers must be seen and the optical system must allow that pictures of all fibers are focused in the same image. The dynamic range of the exposure time of the CCD cameras should be adjusted according to the demands of the fusion process for images of cold fibers and for images of hot fibers, the hot fibers being heated during the fusioning process. Such an optical system is disclosed in European patent applications 98850082.3, 98850080.7 and 98850083.1.

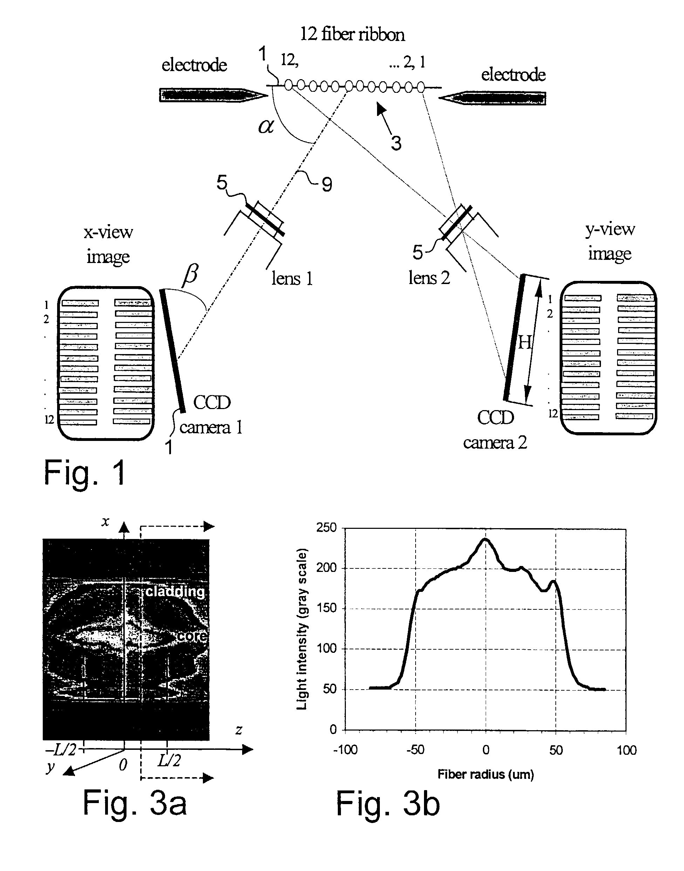

A suitable optical system as disclosed in the cited Europeans patent applications is schematically illustrated in Fig. 1. Two CCD cameras 1 are used to simultaneously capture images of the splice region illustrated as sections of the twelve optical fibers in an optical ribbon fiber 3. The splice region is by means of lenses 5 depicted on the light-sensitive surface of the cameras 1. The optical axes 9 of the lenses 5 are arranged in suitable angles $\beta$ and $\alpha$ respectively to the planes of the photosensitive surfaces of the cameras 1 and the plane 11 through the object to be depicted, i.e. the plane extending through the fibers in the splice region, according to the Scheimpflug and Hinge rules, see H. M. Merklinger, "Principle of view camera focus", *Internet Article,* http://fo.nstn.ca/"hmmerk/HMbook18.html, May 1996, in order to have the twelve fibers all be located in the focal plane. In such an arrangement the magnification of the captured image is not uniform over the fibers.

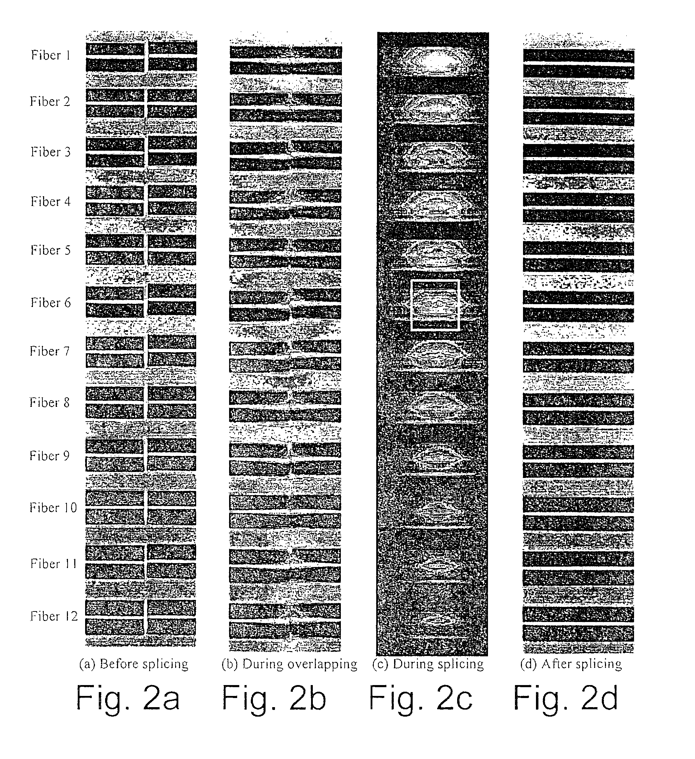

In Figs. 2a, b, c and d cold and hot fiber images taken by the optical system as described above before the splicing operation, in the overlap step, in the very very and after splicing are shown. Although it is difficult to observe the variation of the magnification of each fiber in the images shown, it is very important to consider the variation in image processing and in loss calculation.

Splice loss estimation from core-axis deformation according to prior art

It is well known that loss of light power in fused splices is mainly caused by deformations of the cores as well as fiber-end contamination. The deformations of the cores caused by an offset of the longitudinal axes of the end portions of the spliced fibers, big cleave angles, etc. increase the coupling between the fundamental electromagnetical mode, the cladding modes and the radiation modes of light propagating in an optical fiber. The cleave angle is the angle of the end surface of an optical fiber in relation to the longitudinal axis of the corresponding end portion of the optical fiber, and ideally the cleave should be 90°. The leakage of light energy derived from the mode coupling is the splice loss. If the shape of the deformations of the cores is known, the splice loss can be calculated using mode coupling analysis based on the appearance of the deformation, see the article mentioned above by W. Zheng, "Loss estimation for fusion splices of single-mode fibers". Thus, a correct determination of the deformations of the cores from the captured digital images is a most important step in order to obtain a reasonable accuracy in splice loss estimation.

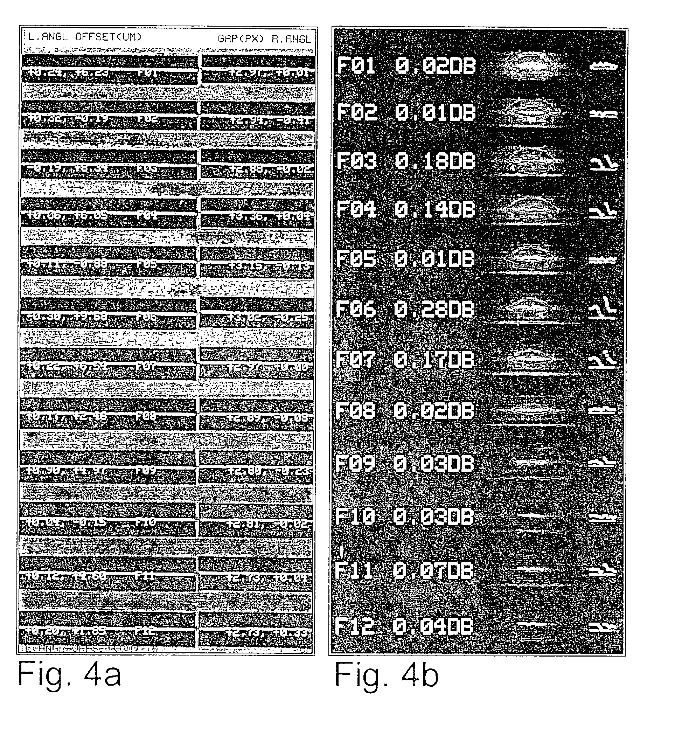

A portion of the hot image in Fig. 2c is magnified and shown in Fig. 3a. No illumination has been used in taking the image. The fiber was glowing since it was heated by the arc discharge during splicing. The thermal radiant emissivity, thus the light intensity, from different portion of the heated fiber varies with dopant materials and their concentration in silica, see T. Katagiri, M. Tachikura, and K. Ishihara, "Direct core observation method using thermal radiation of silica fiber with dopants", *Electron. Commun. Japan,* part 2, Vol. 71, No. 11, pp. 77 - 85, 1988. Thus, the Ge-doped core looks much brighter than the cladding made of pure silica. The light intensity profile measured at the dashed line in Fig. 3a is plotted in Fig. 3b.

The light intensity distribution in the digital image of the heated fiber shown in Fig. 3a can be expressed as a function $I(x, z)$ in the $y$-view projection and a function $I(y, z)$ in the $x$-view projection respectively where the $z$-coordinate axis is located along the longitudinal direction of the fibers and the $x$- and $y$-coordinate axes are perpendicular thereto and to each other, the $x$-axis being located in the plane of the captured image in the $y$-view of Fig. 3a and the $y$-axis being located in the plane of the captured image in the $x$-view. The intensity profile plotted in Fig. 3b can thus be expressed as the function $I(x, z_0)$ at a fixed point $z_0$ the $z$-axis. This profile curve is obtained by the superposition of light emitted from the core and from the cladding as well as noise produced by the optical and electronic systems used for capturing the image.

As a general method of reducing the noise in the image and generating continuous intensity profiles, a low-pass filter such as a Gaussian filter, see the article cited above by W. Zheng, O. Hultén and R. Rylander, "Erbium-doped fiber splicing and splice loss estimation," can be applied in the spatial frequency domain, or in the other words, a convolution can be applied in spatial domain:

$$S(x, z) = \sum_{i=-m}^{m} \sum_{j=-n}^{n} I(x + i, \ z + j)G(i, j, A, B) \tag{1}$$

$$G(i, j, A, B) = \frac{1}{4\pi\sqrt{AB}} \exp\left(-\frac{i^2}{4A} - \frac{j^2}{4B}\right) \tag{2}$$

where the indices $m$ and $n$ determine the sampling area and $A$ and $B$ are parameters of the Gaussian filter. The larger the values of the parameters are, the lower the pass band in the frequency domain. The actual values of the parameter set depend on the optical and electronic imaging system. A large number of tests are normally needed to determine an appropriate set of values for a given imaging system. By searching the numerical solution to

$$\frac{d}{dx}S(x, z)=0 \tag{3}$$

in the $y$-view projection of the hot image at center of fiber along the fiber axis, we can obtain the core deformation as a function $f_{y\text{-view}}(z)$ of $z$ in the $y$-view. Using a similar formula for the $x$-view projection, we can get a core deformation function $f_{x\text{-view}}(z)$ in the $x$-view. As an example, the core deformation functions of the fibers shown in Fig. 2c are calculated and plotted in Fig. 4b.

Knowing the core deformation functions in the two views, $f_{x\text{-view}}(z)$ and $f_{y\text{-view}}(z)$, the splice loss $\Gamma$ due to the core deformation can be computed numerically using the mode coupling theory, see the cited article by W. Zheng, "Loss estimation for fusion splices of single-mode fibers":

$$\Gamma = \Gamma_x + \Gamma_y \tag{4}$$

i. e. the total splice loss $\Gamma$ is a sum of a splice loss $\Gamma_x$, for the x-view projection and a splice loss $\Gamma_y$ for the $y$-view projection, where

$$\Gamma_x = \frac{2C\Delta}{b^2 w^2} \sum_s \left[ \left| F_{x\text{-view}}(\beta_g - \beta_{1s}) \right|^2 \right] \frac{J_1^2(j_{1s}a/b)}{J_0^2(j_{1s})} \ (\text{dB}) \tag{5}$$

$$\Gamma_y = \frac{2C\Delta}{b^2 w^2} \sum_s \left[ \left| F_{y\text{-view}}(\beta_g - \beta_{1s}) \right|^2 \right] \frac{J_1^2(j_{1s}a/b)}{J_0^2(j_{1s})} \quad (\text{dB}) \tag{6}$$

where

$$F(\beta) = \int_{-L/2}^{L/2} f(z) \exp[-i(\beta)z] \, dz, \quad \beta = \beta_g - \beta_{1s.} \tag{7}$$

for both *x*-view and *y*-view projections respectively within the splice region *(-L/2, L/2)* shown in Fig. 3a. Above, $\beta_g$ denotes the propagation constant of the guided electromagnetice *LP$_{01}$* mode and $\beta_{1s}$ denotes the propagation constant of a cladding mode. In a step-index single-mode fiber, they can be approximated by

$$\beta_g \approx \sqrt{n_2^2 k^2 - \frac{1}{a^2} - \frac{2}{w^2}} \tag{8}$$

and

$$\beta_{1s} \approx \sqrt{n_1^2 k^2 - \left(\frac{j_{1s}}{b}\right)^2} \tag{9}$$

where the following notations are used

*a, b* and *w* are radii of the fiber core, the cladding and the mode field, respectively;
$\Delta = (n_2 - n_1)/n_1$, where $n_1$ and $n_2$ are refractive indices of the cladding and the core;
$k = 2\pi/\lambda$, where $\lambda$ is the wavelength;
$J_0$ and $J_1$ are Bessel functions of 0th and 1st orders;
$j_{1s}$ is the s'th root of the 1st order Bessel function $J_1$;
$C = 10\log e = 4.34$.

From Eqs. (1) - (9) we can observe that the core deformation at the splicing area causes the mode coupling. A portion of light energy of the guided mode is coupled to the cladding modes which are not capable of propagating along the fiber. By summing all the energy coupled to the cladding modes, we obtain the splice loss. Since all types of core axis deformation functions have to meet the boundary condition at the two ends of the splicing region (-L/2, L/2), we have

$$f(z) = f_{x\text{-view}}(z) = f_y\text{-view}(z) \equiv 0 \qquad \text{for } z \leq -L/2 \text{ or } z \geq L/2 \tag{10}$$

and thus the integration in Eq. (7) can actually be replaced by a Fourier transform

$$F(\beta) = \int_{-\infty}^{\infty} f(z) \exp(-i\beta z) \, dz \qquad \text{where } \beta = \beta_g - \beta_{1s} \tag{11}$$

Thus, if the deformation function is an analytic function, the loss as given by Eq. (4) might also have be analytic. However, using numerical computation, whatever shapes of deformation found by image processing can be directly substituted into Eq. (20) to obtain the splice loss, the calculated values being shown in Fig. 4b. We have not made any approximation as to the shape of core axis deformation in hot images. However, the splice loss due to the core size deformation, the refractive index fluctuation, and contamination are not considered herein.

Splice loss estimation from cladding deformation

Although more than 80% of the ribbon-fiber types found on the world market can be handled by the hot fiber-image method as described above, some ribbon fiber types or certain splice combinations exist which cannot easily be handled by the hot image method. For example, the core is completely invisible in the hot image of optical fibers having a pure silica core, since there is no germanium or other dopant in the core. For a splice of some fibers of dissimilar types the thermal radiant emissivity of one fiber is much stronger than that of the other fiber. Then it may be very difficult to observe the cores of the two fibers at the splicing position using the same strength of fusion current. However, for these cases the loss estimation formula mentioned above would also work, if there exists some way of obtaining the core-axis deformation function without using the hot fiber images.

Most of the fiber types commercialized for general telecommunication purposes have a very low core to cladding eccentricity, generally less than 0.2 $\mu$m. For these low eccentricity fibers, the core deformation due to the splicing operation can be predicted from the change of the cladding shape during the splicing process. A splice-image database, including a large population of different fiber types and splice types, has been established including more than 200 splice data files for 12-fiber and 8-fiber ribbon of 4 main fiber types, in order to determine relations between the cladding deformation and the core deformation. The core deformation of all fiber types selected for the database are clearly visible in the hot images.

Each of the splice data files contains:

- the date and time when the splice was made;
- 12 images taken before, during and after splicing for all fibers in the ribbon in both x and y view projections;
- all fusion and control parameters for making the splice, such as fusion current, fusion time, camera exposure conditions, etc.;
- all estimation parameters and estimated losses for each fiber;
- OTDR bi-directionally measured splice loss for each fiber.

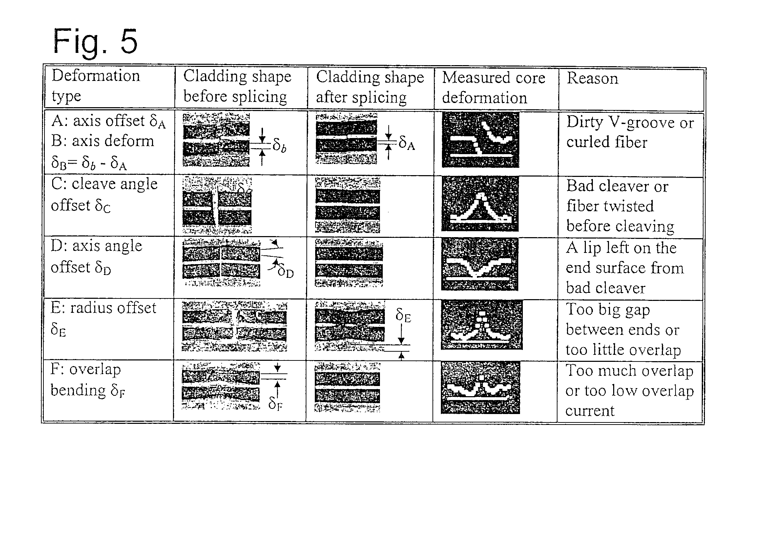

Some typical relations between the core deformation and cladding deformation are summarized from these 2000 splice points in the database and are listed in the overview in Fig. 5. The typical cladding deformation ranges are listed in table 1 for each corresponding deformation type.

TABLE 1

| Typical cladding deformation ranges from 1404 splice data files. The data from intentionally made bad splices are excluded. All data are absolute values except the radius offset. | | | | |
|---|---|---|---|---|
| Cladding deform type and measured loss | Maximum | Minimum | Average | Standard deviation |
| Type A: Axis offset $\delta_A$ | 1.4 $\mu$m | 0.0 $\mu$m | 0.4 $\mu$m | 0.2 pm |
| Type B: Axis deform $\delta_B$ | 13.7 $\mu$m | 0.1 $\mu$m | 2.3 $\mu$m | 1.9 $\mu$m |
| Type C: Cleave angle offset $\delta_C$ | 3.2 deg. | 0.0 deg. | 0.5 deg. | 0.3 deg. |
| Type D: Axis angle offset $\delta_D$ | 1.1 deg. | 0.1 deg. | 0.6 deg. | 0.2 deg. |
| Type E: Radius offset $\delta_E$ | 8.3 $\mu$m | -4.2 $\mu$m | -0.5 $\mu$m | 0.01 $\mu$m |
| Type F: Overlap bending $\delta_F$ | 7.0 $\mu$m | 0.0 $\mu$m | 1.1 $\mu$m | 0.6 $\mu$m |
| Measured loss | 0.82 dB | 0.00 dB | 0.06 dB | 0.07 dB |

In the different cases of deformation the cores are deformed and/or not aligned with each other. This can in some cases be seen as a deformation of the claddings before or after the splicing operation. In other cases there is an irregular location of the outer cladding sides as seen in the pictures taken before and/or after the splicing. Also, there may be irregularities at the end surfaces of the fibers which are to be spliced. In the different cases a characteristic offset $\delta_i$ can be defined, which can be measured in the cold pictures taken before and/or after splicing. In the A type cladding deformation there is an offset $\delta_A$ of the cores of the spliced fibers. The offset can be measured directly as a cladding offset in the finished splice. In the B type the cores of the fibers are deformed at the splicing surface. A

characteristic offset $\delta_B$ is here determined as the difference between the offset $\delta_b$ of the claddings before splicing and the offset $\delta_A$ of the claddings in the finished splice. In the deformation type C the end surfaces of the fibers before splicing are not parallel - they should both be substantially perpendicular to the axes of the fibers. A characteristic offset $\delta_C$ is here defined as the angle of the end surfaces in relation to each other and is measured in the picture of the splicing region taken before actually splicing the fibers. In the type D of cladding deformations there is an angular offset $\delta_D$ between the cores of the fibers before splicing, which can be obtained from the angles between the outer sides of the cladding in the corresponding picture taken before splicing. This angular offset is the characteristic offset for this deformation type. For splices having the E type deformation the heated region after splicing has a smaller diameter than the rest of the fibers, this being called a radius offset $\delta_E$ which can be measured in the picture taken after splicing as the difference between the regular radius of the fibers and the radius of the narrower splice region. Finally in a deformation of type F there is a bending of region in which the splice is to be made. This means that in the picture taken before splicing said region is curved in one direction from the common axis of the fibers. The height of peak of this curved region in relation to the regular cladding sides is the characteristic offset $\delta_E$ in this case.

From Fig. 1 and table 1 we find that the shape of the core for most of the core deformation types can be simulated or approximated by an exponential function $f_e(z)$:

$$f_e(z) = \begin{cases} \delta_l e^{\gamma_l z}; & z < 0, \quad \gamma_l > 0 \\ \delta_r e^{-\gamma_r z}; & z > 0, \quad \gamma_r > 0 \end{cases} \tag{12}$$

The subscripts $r$ and $l$ denote left and right, $\delta$ and $\gamma$ describe the magnitude of and the curvature of the core deformation respectively and $z$ is the position or distance in the longitudinal direction, the $z$-coordinate direction as defined above. The exponential function $f_e(z)$ satisfies the boundary condition of Eq. (10) when $L \to \infty$. Practically, if the splice is not too close to another splice or fiber end, we can always find a value of $\gamma$ which makes $f_e(z)$ to converge sufficiently fast. Different $\gamma$ values are actually related to different types of core deformation according to Fig. 1. The smaller the $\gamma$ value is, the straighter is the core axis, and the closer to a straight line is the actual core shape . Some typical shapes of $f_e(z)$ is plotted in Figs. 2a and 2b. From Figs. 2a and 2b we find that core deformation types A and B as used in Fig. 1 and table 1 can be well simulated by a function $f_e(z)$ having curvature magnitudes $\delta_l$ and $\delta_r$ of opposite signs, and core deformation types C to F can be simulated by a function $f_e(z)$ having curvature magnitudes $\delta_l$ and $\delta_r$ of the same sign. Sometimes, a core deformation can best be simulated by a superposition of two or more exponential functions: $f_e(z) = f_{e1}(z) + f_{e2}(z) +...$ Two examples of such superposed functions are shown in Figs. 3a and 3b. The functions according to Fig. 3a are suitable for simulating the deformation type F and the functions according to Fig. 3b can often be used when a splice suffers from both an axis offset and a cleave angle offset, i.e. is a combination of type B and type C.

Substituting the deformation function $f_e(z)$ in Eq. (11), we can obtain the modular square of the corresponding Fourier transform

$$|F(\beta)|^2 = \frac{\left[\delta_l \gamma_l (\gamma_r^2 + \beta^2) + \delta_r \gamma_r (\gamma_l^2 + \beta^2)\right]^2 + \left[\delta_l \beta (\gamma_r^2 + \beta^2) - \delta_r \beta (\gamma_l^2 + \beta^2)\right]^2}{\left[(\gamma_l^2 + \beta^2)(\gamma_r^2 + \beta^2)\right]^2} \tag{13}$$

From the splice image database it has been found that the curvature $\gamma_l$ or $\gamma_r$ of the core deformation shape is closely related to the fusion current, duration, and overlap distance. In most cases, except for splices made of fiber ends having a large cleave angle such as more than 5 degrees of the fiber end surface on one side of the splice, we have $\gamma_l = \gamma_r$. Thus, Eq. (13) degenerates to

$$|F(\beta)|^2 = \frac{(\delta_l + \delta_r)^2 \gamma^2 + (\delta_l - \delta_r)^2 \beta^2}{(\gamma^2 + \beta^2)^2}, \text{ for } \gamma = \gamma_l = \gamma_r. \tag{14}$$

) It was also found in the splice image database that in more than 90% of splices the deformation magnitudes are equally large on both left and right sides, i.e., $|\delta_l| = |\delta_r|$. Exceptions happen in those cases where the electric arc used for splicing has a position deviating from a line extending perpendicularly through the center of the splice and thus heats one fiber end much more strongly than the other. Thus, we can in general obtain splice losses from two main classes of deformation. For splices belonging to the deformation classes A and B, $\delta = \delta_l = -\delta_r$, the splice loss can be derived from Eq. (6) and (14):

$$\Gamma = \frac{8C\Delta\delta^2}{b^2 w^2} \sum_s \frac{\beta^2}{(\gamma^2 + \beta^2)^2} \frac{J_1^2(j_{1s}a/b)}{J_0^2(j_{1s})} \text{ (dB) , for } \gamma = \gamma_l = \gamma_r \text{ and } \delta = \delta_l = -\delta_r. \quad (15)$$

Similarly, for splicing belonging to the deformation classes C to F, see Fig. 1 and table 1, we have

$$\Gamma = \frac{8C\Delta\delta^2}{b^2 w^2} \sum_s \frac{\gamma^2}{(\gamma^2 + \beta^2)^2} \frac{J_1^2(j_{1s}a/b)}{J_0^2(j_{1s})} \text{ (dB) , for } \gamma = \gamma_l = \gamma_r \text{ and } \delta = \delta_l = \delta_r. \quad (16)$$

From Eqs. (15) and (16) we can find typical relationships between the splice loss and core deformation types. First of all, the splice loss is always directly proportional to the square of magnitude $\delta$ of the core deformation and is inversely proportional to the square of the mode field radius, provided that MFR is not too small, $w > 3$ µm, for all types of core deformations:

$$\Gamma = c(\gamma, \beta) \, \delta^2/w^2 \qquad \text{for } w > 3 \qquad\qquad (17)$$

Secondly, the coefficient $c(\gamma, \beta)$ is determined by the deformation curvature $\gamma$ and the fiber design $\beta$. From Eqs. (15) and (16) we obtain the loss coefficient expression for different core deformation types

$$c(\gamma, \beta) = \frac{8C\Delta}{b^2} \sum_s \frac{\beta^2}{(\gamma^2 + \beta^2)^2} \frac{J_1^2(j_{1s}a/b)}{J_0^2(j_{1s})} \quad \text{for deformation class A and B} \qquad (18)$$

and

$$c(\gamma, \beta) = \frac{8C\Delta}{b^2} \sum_s \frac{\gamma^2}{(\gamma^2 + \beta^2)^2} \frac{J_1^2(j_{1s}a/b)}{J_0^2(j_{1s})} \quad \text{for deformation class C, D and E} \qquad (19)$$

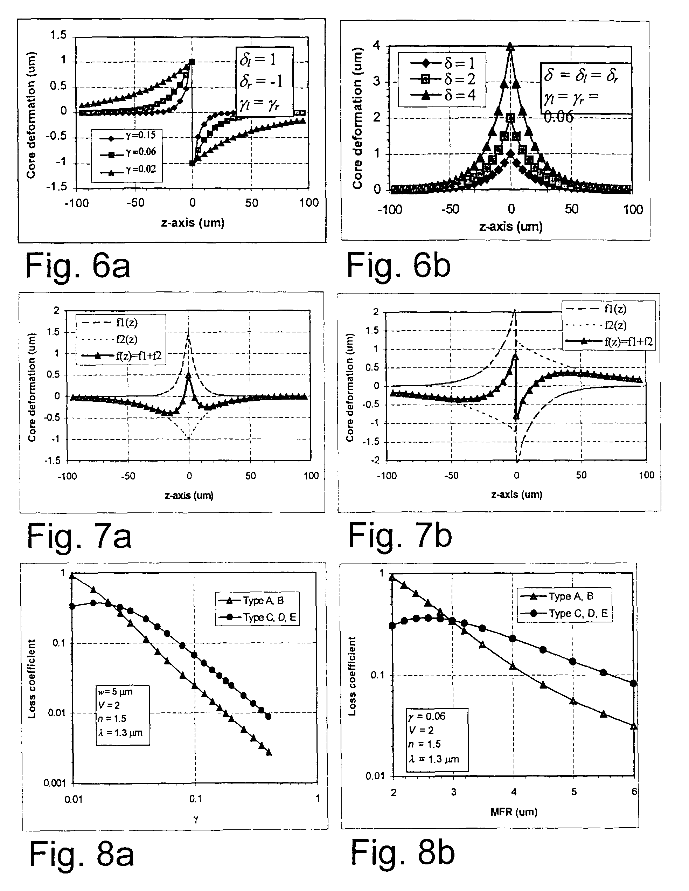

Some typical loss coefficient curves as functions of the core deformation curvature $\gamma$ and the mode field radius $w$ are plotted in Figs. 8a and 8b. From Figs. 8a and 8b it can observed that in most cases splices belonging to deformation classes C to F generate a higher splice loss than the classes A and B if the deformation magnitude $\delta$ and curvature $\gamma$ are same. This means that the splice loss is more sensitive to a large cleave angle offset than a large axis offset. We can also see that a larger curvature $\gamma$ gives a lower splice loss, since a smaller portion of guided light is capable of following the curved core in order to couple to the cladding modes. This is the reason why a rather high fusion current and a long duration of the fusioning procedure are necessary for ribbon fiber splicing to overcome the offsets of axes and the deviations of the end surfaces from the perpendicular orientation. For an automated fusion splicer the fusion parameters are often optimized. For a small variation of the strength of the electric arc the curvature $\gamma$ is almost a constant $\gamma_i$ for each of the deformation classes $i$, $i$=A, B, ..., F. The actual value of the constant $\gamma_i$ can be obtained by measuring the core shape in hot splicing images. Furthermore the average splice losses for splices between fibers of the dispersion shifted types are often higher than in normal SM (single-mode) fibers because of their smaller mode field radius (MFR) value $w$. A smaller $w$ produces a higher splice loss not only owing to the inverse relation of Eq. (17), but also caused by the change of the loss coefficient, see Fig. 6b, since the more concentrically distributed guided light has a higher capability of following the curved core. However, since optical fibers having thin cores, such as erbium doped fibers, etc., have not yet been employed in ribbon fibers, the MFRi in current fiber types varies only from 4 µm to 5 µm and the loss coefficient can be approximated by a function which is only dependent on $\gamma_i$:

$$c(\gamma_i) \approx c(\gamma_i, \beta_{|w=4.5}), \text{ for } \qquad i = \text{A, B, ..., F and } 4 \leq w \leq 5 \qquad\qquad (20)$$

For the deformation type A and B, it is obvious that $\delta$ has a linear dependence on the axis offsets $\delta_A$ and $\delta_B$, see Fig. 1. However, the relation between $\delta$ and angle offsets $\delta_C$, $\delta_D$ and the radius offset $\delta_E$ are not very obvious. Comparing the cladding and the core deformation for a large number of splices in the splice database, it was found that a linear relation is statistically valid for all the five deformation classes, if the cladding deformation is within the range listed in table 1. We have also intentionally made some extremely bad splices having cladding deformations much larger than the maximum values found in table 1. A linear relation is not true any more for classes C to F for such very bad splices. In most types of automated ribbon fiber splicers, all fiber ends are checked before splicing. If the cleave angles, the gaps between fiber ends or the axis offsets are found to be larger than preset thresholds, the ribbon fiber will in any case be rejected owing to the bad splice produced. Thus very bad fiber ends are automatically excluded and the following linear relation between the deformation magnitude $\delta$ and the offsets $\delta_A$ to $\delta_F$ can be used:

$$\delta = \kappa_i \, \delta_i, \qquad \text{for } i = A, B, ..., F \tag{21}$$

Moreover, several defects may appear at the same fiber end. Different deformation types may combine as shown in Figs. 6a and 6b. The superposition of the deformation function $f(z)$ does not yield a simple addition of losses, since the Fourier transform of $f(z)$ is a complex function. However, we can estimate the high limit of the total splice loss:

$$\Gamma_{\text{total}} \leq \frac{1}{w^2} \sum_{i=A}^{F} \kappa_i \, c(\gamma_i) \delta_i^2 , \quad \text{for the } x \text{ or } y \text{ view} \tag{22}$$

The total splice loss will be estimated by the addition of the total losses in the *x*- and *y*-view.

EXPERIMENTAL RESULTS

In order to determine the splice loss estimation parameters *m, n, A*, and *B* in Eq. (1) for the hot-fiber-image loss estimation as well as the parameters $\kappa_i \, c(\gamma_i)$, for $i = A, B, ..., F$ in Eq. (22) for the cold-fiber-image loss estimation, a computer program has been developed. Using the program operating on input data from the splice image database, about 340,000 ribbon splices were simulated, and 3.7 million splice points were re-estimated using different estimation parameter sets. After the simulation, both the hot and cold estimation methods as described above together with all those estimation parameters calculated from the database were implemented in an automated ribbon splicer to verify the feasibility of the discussions above.

The general method when using the information only in cold-fiber images comprises the steps of:
From the pictures of the splice region before splicing and after splicing find the cladding shape, determine the deformation type i, i = A, B, C, D, E or F and the value of the appropriate parameter $\delta_i$. (see Fig. 5)
Find the values $\kappa_i$ and $c(\gamma_i)$ from a table-lookup in a table made .
Use Equ. (22) with w = 4 for estimating the total loss.

The Bellcore accuracy criteria for splice loss estimation, see Bellcore, *Generic Requirements for Multi-Fiber Single-Mode Optical Splices and Splicing Systems.* GR-1095-CORE, Issue 2, November 1996, are widely accepted in the world and are listed in table 2. These criteria contain limits for both 90% and 100% of the population, as shown in table 2. These two limits must be satisfied in order for the criteria to be met. The criteria require a number of splices having losses larger than 0.4 dB in order to obtain conformance. The criteria are identical to those for single fiber splicing.

Table 2:

| Bellcore Splice Loss Estimator Accuracy Criteria | | | | |
|---|---|---|---|---|
| | **Estimating Range** | | | |
| Actual Loss | Requirement | | Objective | |
| | 90% | 100% | 90% | 100% |
| ≤0.40 dB | ±0.10 dB | ±0.25 dB | ±0.05 dB | ±0.10 dB |
| >0.40 dB | ±25% | ±50% | ±15% | ±30% |

In our experiment four different types of 12-fiber ribbons and one type of 8-fiber ribbon have been tested. For each splice both the core-axis deformation and the cladding deformation methods, also called the hot and cold methods respectively, as described above have been employed to make estimations of the splice losses. Moreover the two methods have been combined to report the larger estimation value. If the loss estimated using the hot and cold methods, i.e. determined from Eqs. (4) and Eq. (22), are denoted by $\Gamma_{bot}$ and $\Gamma_{cold}$ respectively, the loss $\Gamma_{comb}$ of the combined method is defined as

$$\Gamma_{comb} = \max(\Gamma_{hot}, \Gamma_{cold}) \tag{23}$$

for each splice. The experimental results are listed in table 3. A few comments should be made on the results. Since all ribbon fiber selected for the test have an eccentricity of the cores in relation to the cladding which is almost equal to zero, it appears that the results from the cold method is better and more stable than the hot image method. Especially for fibers of the MCVD type the hot method did not work very well because of the bad hot image quality. Nether the hot nor cold method alone could meet the Bellcore 100% requirement. However, the combined method did work for most fiber types. In the complete experiment, the same set of estimation parameters were used for all fiber types. Since fibers of the True-wave type has a smaller MFR and are much more sensitive to deformations of the axes, a special modification to the estimation parameters $\kappa_B$ was used to improve the estimation results. Actually, the hot method did not worke very well for the True-wave fiber type, because the thin core thereof makes the resolution even worse in hot images.

Table 3:

| Experimental results of splice loss estimation | | | | | | |
|---|---|---|---|---|---|---|
| | Meet Bellcore 90% requirement | | | Meet Bellcore 100% requirement | | |
| Fiber types | The hot method only Eq.(4) | The cold method only Eq.(22) | The combined method Eq. (23) | The hot method only Eq.(4) | The cold method only Eq.(22) | The combined method Eq. (23) |
| OVD-12 (40 splices) | 95.96% | 93.09% | 93.90% | 99.36% | 99.80% | 100.00% |
| MCVD-12 (20 splices) | 92.50% | 91.20% | 92.13% | 99.50% | 99.54% | 100.00% |
| VAD-12 (40 splices) | 91.83% | 88.38% | 92.29% | 99.35% | 99.38% | 99.58% |
| Truewave-12 (20 splices) | 88.17% | 92.13% | 92.13% | 96.24% | 99.54% | 99.54% |
| VAD-8 (45 splices) | 93.23% | 92.62% | 93.23% | 97.23% | 99.08% | 99.69% |

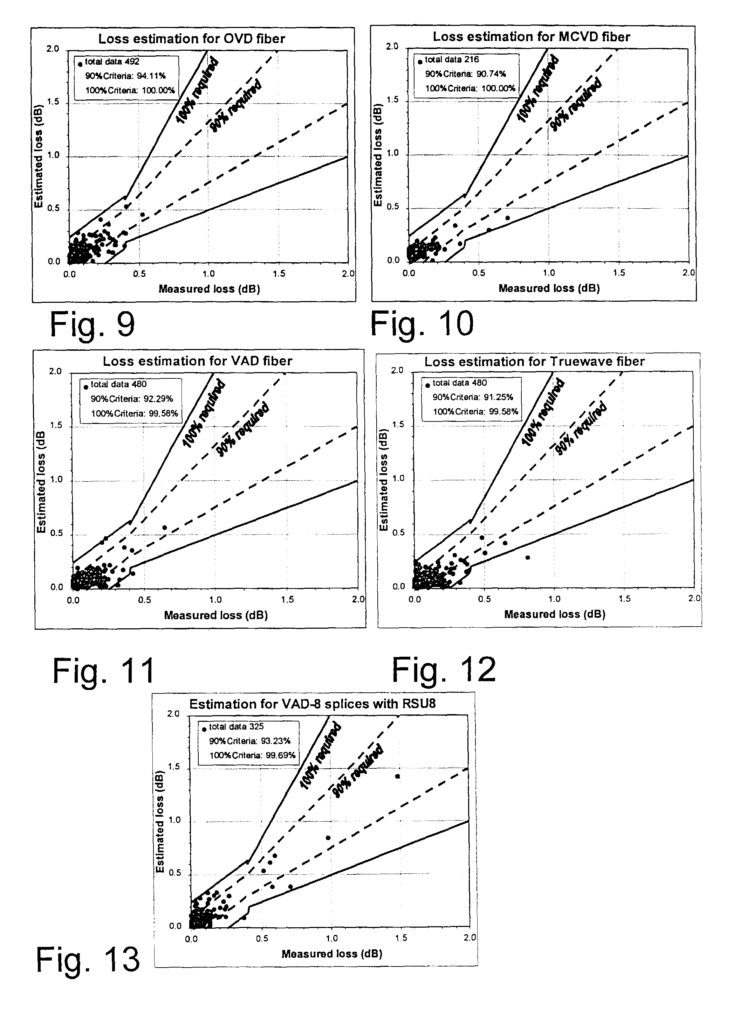

The corresponding detailed estimation information can be found in Figs. 9 - 13. All data plotted are obtained from the combined estimation method. The splice losses were measured by OTDR using the bi-directional method suggested in the Bellcore specifications. The Bellcore requirement for loss estimation accuracy is indicated by regions located within dashed lines and solid lines respectively. In order to meet the requirement, 90% of dots should appear within the region inside the dashed lines and 100% of dots should fall into the region with the solid lines respectively.

**Claims**

**1.**  A method of estimating loss in a splice made between two optical fibers, comprising the steps of

- taking a picture of the splice and
- determining from the picture an estimation of the loss,

**characterized in**

- that a picture is taken of a region of the optical fibers at end surfaces which are to be joined directly before splicing when the optical fibers are positioned at each other having their end surfaces in contact with each other,
- that a picture is taken after splicing,
- that the pictures are analyzed to determine a type of deformation and a characteristic offset associated with the type of deformation,
- that from the determined type of deformation and the determined characteristic offset an estimate of the optical loss in the splice is calculated.

2. A method according to claim 1, **characterized in** that in determining a characteristic offset lateral offsets between exterior sides of the optical fibers are determined before and after splicing and that a difference of the lateral offsets is calculated.

3. A method according to claim 1, **characterized in** that in determining a characteristic offset an angle between end surfaces of the optical fibers are determined before splicing.

4. A method according to claim 1, **characterized in** that in determining a characteristic offset an angle between longitudinal directions of adjacent end regions of the optical fibers are determined before splicing.

5. A method according to claim 1, **characterized in** that in determining a characteristic offset a difference between a radius of adjacent end regions of the optical fibers before splicing and after splicing is determined.

6. A method according to claim 1, **characterized in** that in determining a characteristic offset a difference between a radius of adjacent end regions of the optical fibers before and after splicing is determined.

7. A method according to claim 1, **characterized in** that in determining a characteristic offset a the height of a lateral bending of adjacent end regions of the optical fibers before splicing is determined.

12 fiber ribbon

electrode

1, 12,    ... 2, 1    electrode

$\alpha$

3

9

5

x-view
image

lens 1

5

lens 2

y-view
image

$\beta$

1
2
.
.
12

CCD
camera 1

1

H

1
2

12

CCD
camera 2

# Fig. 1

$x$

cladding

core

$z$

$-L/2$    $0$    $L/2$

$y$

# Fig. 3a

# Fig. 3b

Fiber 1
Fiber 2
Fiber 3
Fiber 4
Fiber 5
Fiber 6
Fiber 7
Fiber 8
Fiber 9
Fiber 10
Fiber 11
Fiber 12

(a) Before splicing    (b) During overlapping    (c) During splicing    (d) After splicing

Fig. 2a      Fig. 2b      Fig. 2c      Fig. 2d

Fig. 4a

Fig. 4b

# Fig. 5

| Deformation type | Cladding shape before splicing | Cladding shape after splicing | Measured core deformation | Reason |
|---|---|---|---|---|
| A: axis offset $\delta_A$<br>B: axis deform<br>$\delta_B = \delta_b - \delta_A$ | $\delta_b$ | $\delta_A$ | | Dirty V-groove or curled fiber |
| C: cleave angle offset $\delta_C$ | | | | Bad cleaver or fiber twisted before cleaving |
| D: axis angle offset $\delta_D$ | $\delta_D$ | | | A lip left on the end surface from bad cleaver |
| E: radius offset $\delta_E$ | | $\delta_E$ | | Too big gap between ends or too little overlap |
| F: overlap bending $\delta_F$ | $\delta_F$ | | | Too much overlap or too low overlap current |

Fig. 6a

Fig. 6b

Fig. 7a

Fig. 7b

Fig. 8a

Fig. 8b

Fig. 9

Fig. 10

Fig. 11

Fig. 12

Fig. 13